# EUROPEAN PATENT SPECIFICATION

(11) **EP 1 138 970 B1**
(45) Date of publication and mention of the grant of the patent: **07.06.2006**
(21) Application number: 01104154.8
(22) Date of filing: 21.02.2001
(51) Int. Cl.: F16D 65/12, F16D 69/04

(54) **Brake disk composed from different metals and method for manufacturing the same**
Aus unterschiedlichen Metallen zusammengesetzte Bremsscheibe und Verfahren zu deren Herstellung
Disque de frein composé de métaux différents et procédé de sa fabrication

(30) Priority: 31.03.2000 JP 2000096460
(43) Date of publication of application: 04.10.2001
(73) Proprietor: HONDA GIKEN KOGYO KABUSHIKI KAISHA, Tokyo (JP)
(72) Inventor: Takahashi, Kyo, c/o K.K. Honda Gijutsu Kenkyusho, Wako-shi, Saitama (JP); Yoshida, Masahiro, c/o K.K. Honda Racing, Asaka-shi, Saitama (JP); Kageyama, Hisayoshi, c/o K.K. Honda Racing, Asaka-shi, Saitama (JP)
(74) Representative: Liska, Horst

(56) References cited:
- DE-A- 2 108 950
- GB-A- 1 290 645
- US-A- 5 626 211
- PATENT ABSTRACTS OF JAPAN vol. 008, no. 166 (M-314), 2 August 1984 (1984-08-02) & JP 59 062738 A (YAMAHA HATSUDOKI KK), 10 April 1984 (1984-04-10)
- PATENT ABSTRACTS OF JAPAN vol. 007, no. 189 (M-237), 18 August 1983 (1983-08-18) & JP 58 091936 A (YAMAHA HATSUDOKI KK), 1 June 1983 (1983-06-01)

## Description

The present invention relates to a brake disk against which brake pads are pressed for braking.

A disk brake for a motorcycle has a brake disk and brake pads which are pressed against the opposite surfaces (friction members) of the brake disk for braking. Some lightweight brake disk has a disk body formed of a lightweight material, and friction members of a highly frictional material are attached to the opposite surfaces of the disk body.

A disk brake disclosed in, for example, JP-A No. H8-226478 has a lightweight brake disk. This technique forms friction parts by fixing frictional material to the opposite surfaces of the disk body of the brake disk. The formation of the friction parts of the frictional material enables the formation of the lightweight brake disk of a light aluminum alloy.

The present invention forms friction parts by attaching a frictional material to a brake disk by spraying or application. The thickness of the friction parts is in the range of about 10 to about 20 µm.

Some type of brake disks need friction parts of a greater thickness.

A brake disk provided with thick frictional members is disclosed in, for example, JP-A No. H9-42339. This technique bonds friction members of an alloy steel to the opposite surfaces of an aluminum disk by explosive cladding.

An explosive cladding method has troublesome steps of putting an alloy steel member on an aluminum member, mounting a buffer on the alloy steel member, putting a proper amount of explosive on the buffer, and detonating the explosive by a detonator attached to one end of the explosive. Thus, the explosive cladding method is costly.

A disk rotor disclosed in Japanese Utility Model No. 2557898 is a brake disk provided with a thick frictional member. This technique places a plate-shaped member of a carbon-fiber-reinforced composite material between a pair of metal plates forming a disk rotor, and joins together the pair of metal plates and the plate-shaped member by riveting.

A process for uniting together the pair of metal plates and the plate-shaped member needs a step of forming a plurality of through holes in the pair of metal plates and the plate-shaped member and a step of pressing down the ends of a plurality of rivets. Thus, this technique needs many parts, which increases the cost.

Thus, the prior art are not practically suitable for mass production in which a member formed of a titanium alloy or an aluminum alloy and member formed of an iron-base material are bonded together.

An explosive cladding method proposed in JP-A No. H9-42339 and a rivet bonding method disclosed in Japanese Utility Model No. 2557898 increase the manufacturing cost of the brake disk.

DE 21 08 950 A discloses a multi-piece brake disk for disk brakes of vehicles, in particular motor vehicles, having a basic body of an aluminum alloy, for example, and friction elements whose material has greater heat resistance than the material of the basic body of the brake disk, which are mounted on both sides of the basic body by means of diffusion welding or diffusion soldering.

US-A-5 626 211 discloses a further brake disk for a disk brake system which is formed of a number of stacked metal plates with outside plates having a high resistance to abrasion and great strength, and with inner plates formed of metal having good heat transfer characteristics such as titanium, aluminum or aluminum alloy, which are bonded together by brazing.

it is an object of the present invention to provide techniques capable of reducing the weight of a brake disk for a motorcycle to be mounted on a hub included in a wheel by bonding together a member of a titanium alloy or an aluminum alloy and a member formed of an iron-base member without adversely affecting the braking performance.

This object is achieved by a brake disk for a motorcycle according to claim 1.

The brake disk for a motorcycle, to be mounted on a hub included in a wheel comprises a disk body formed of a titanium alloy or an aluminum alloy, and friction members formed of an iron-base material and bonded to the opposite surfaces of the disk body by brazing; wherein the pair of friction members have different thicknesses, respectively.

The disk body is formed of a titanium alloy or an aluminum alloy, and the friction members formed of an iron-base material are bonded to the opposite surfaces of the disk body by brazing. The titanium alloy or the aluminum alloy is light and has a high strength and enables the reduction of the weight of the brake disk without deteriorating the braking ability of the brake disk.

The friction members are bonded to the disk body by a brazing method. The friction members can be bonded to the disk body simply by forming a brazing filler metal layer between each of the friction members and the disk body and melting the brazing filler metal layer.

As generally known, when a brake disk is incorporated into a motorcycle, the outer surface of the brake disk opposite the inner surface of the same facing the wheel of the motorcycle is exposed more efficiently to running wind than the inner surface. Therefore, when a braking force is exerted on the brake disk, the inner friction member facing the wheel is heated at a temperature higher than that at which the outer friction member is heated. Friction coefficient between the friction member and a brake pad decreases as the temperature of the friction member rises. Therefore, it is important to maintain the friction members at a fixed temperature.

To realize this, the pair of friction members are formed in different thicknesses, respectively, and, for example, the brake disk is incorporated into a motorcycle so that the thicker friction member is on the inner surface and faces the wheel and the thinner friction member is on the outer surface and is exposed more efficiently to running wind. The thicker friction member is capable of absorbing a large amount of heat generated when a braking force is applied to the brake disk. Thus, the inner friction member facing the wheel and the outer friction member not facing the wheel are maintained at the same temperature.

Consequently, both the friction coefficient associated with the inner friction member and the friction coefficient associated with the outer friction member can be held on a substantially fixed level.

A preferred embodiment of the present invention will be described with reference to the accompanying drawings.
Fig. 1 is a side elevation of a motorcycle employing a brake disk in a first embodiment according to the present invention.
Fig. 2 is a sectional view taken on line 2-2 in Fig. 1.
Fig. 3 is a sectional view of the brake disk not forming part of the claimed invention.
Fig. 4 is a plan view of the brake disk.
Fig. 5 is a view of assistance in explaining a brazing method to be carried out when fabricating the brake disk in the first embodiment.
Fig. 6 is a graph showing the variation of the friction coefficient associated with the friction member of a brake disk according to the present invention with the temperature of the same.
Fig. 7 is a sectional view of a brake disk according to the present invention.
Fig. 8 is a graph showing the relation between friction coef f icient associated wi th the brake disk and the thickness of friction members.

In the following description, words "front", "back", "right" and "left" signify directions with respect to a rider, and the drawings are supposed to be viewed with the reference characters in an erect position.

Amotorcycle 10 has a body frame 11, a front fork 12 supported in a head pipe 11a included in the body frame 11, a handlebar 13 attached to the upper end of the front fork 12, a front wheel 14 attached to the lower end of the front fork 12, a fuel tank 15 mounted on a front part of the body frame 11, a seat 16 mounted on a part of the body frame behind the fuel tank 15, a power unit 17 (formed by combining an engine 17a and a transmission 17b) disposed under and attached to a front part of the body frame 11, swing arms 18 pivotally joined for swinging to a rear part of the body frame 11, and a rear wheel 19 supported on a rear end part of the swing arm 18 and provided with a brake disk 30 in a preferred embodiment according to the present invention. The brake disk 30 of the present invention will be described hereinafter.

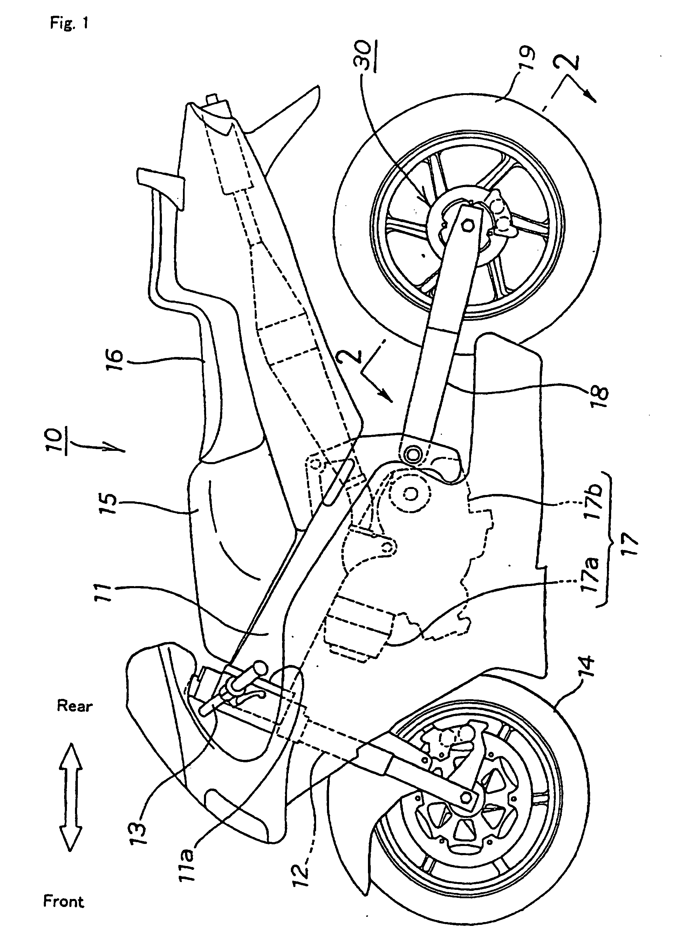

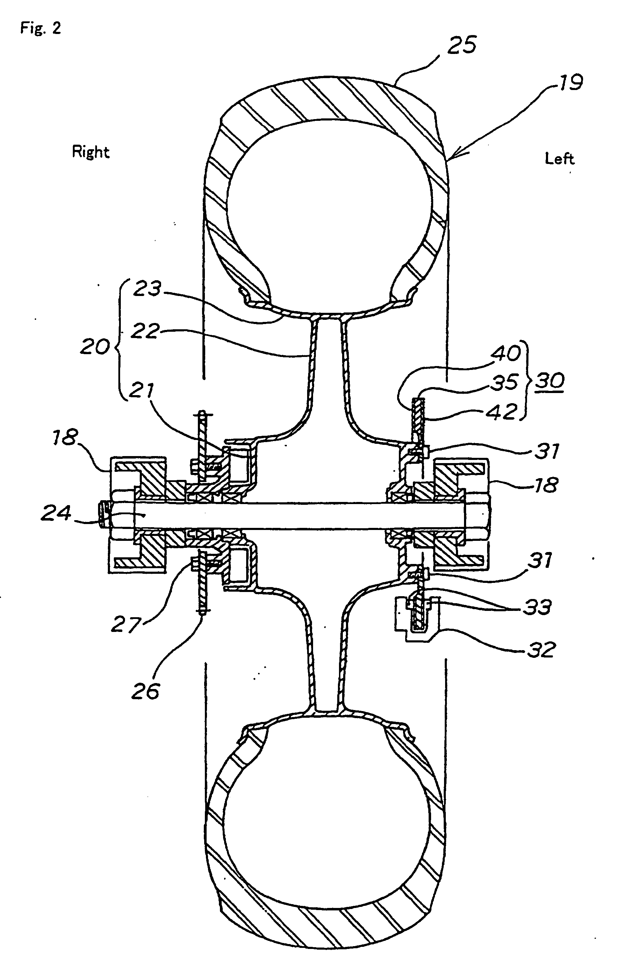

Fig. 2 is a sectional view taken on line 2-2 in Fig. 1. A wheel 20 comprises a hub 21, a spoke 22 and a rim 23. The wheel 20 is disposed between the swing arms 18 and is supported for rotation by a rear axle 24 attached to the swing arms 18. A tire 25 is fitted on the rim 23. A sprocket 26 is fastened to the right side surface of the hub 21 with bolts 27 and a drive chain, not shown, is wound round the sprocket 26. The brake disk 30 is fastened to the left side surface of the hub 21 with bolts 31 and a caliper 32 is combined with a lower part of the brake disk 30.

The caliper 32 is attached to the body of the motorcycle 10 (Fig. 1). Brake pads 33 are held on the caliper 32 so as to face an inner friction member 40 and an outer friction member 42 of the brake disk 30, respectively.

The calipers 33 held on the caliper 32 are pressed against the inner friction member 40 and the outer friction member 42, respectively, to exert a braking force to the brake disk 30.

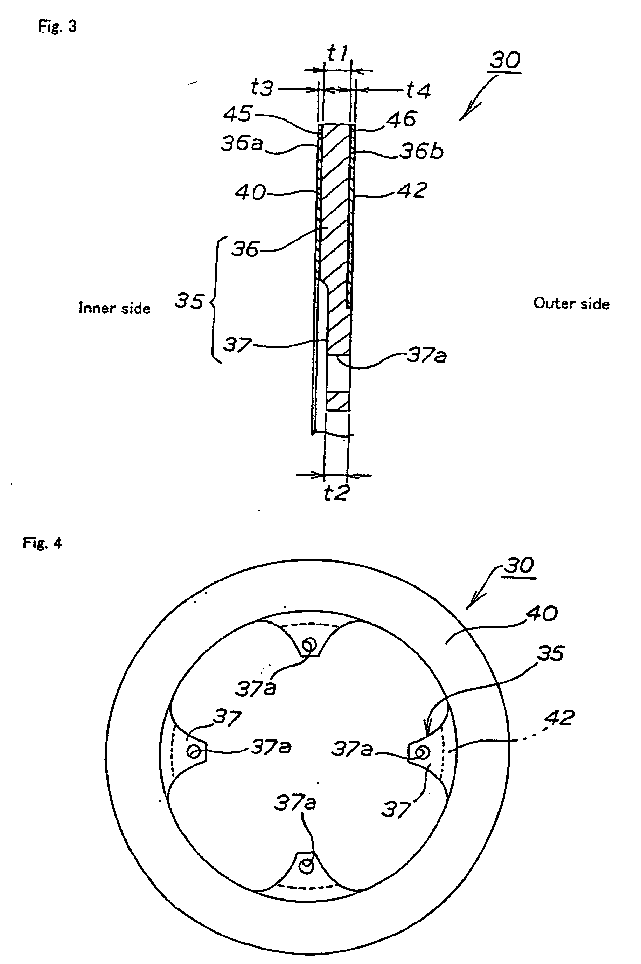

Fig. 3 is a sectional view of a brake disk.

The brake disk 30 has a disk body 35 formed of a titanium alloy, an inner friction member 40 formed of a stainless steel and bonded by brazing to the inner surface 36a, i.e., a surface facing the wheel 20, of the brake disk 35, and an outer friction member 42 formed of a stainless steel and bonded by brazing to the outer surface 36b, i.e., a surface not facing the wheel 20.

The disk body 35 has an annular part 36 of a thickness t1 and mounting lugs 37 of a thickness t2 provided with a through hole 37a and formed integrally with the annular part 36 so as to project radially inward from the inner circumference of the annular part 36. The disk body 35 is formed of a titanium alloy and is provided with a recess in the inner surface 36a facing the wheel 20. Although it is preferable that the titanium alloy contains 6% aluminum and 4% vanadium, the titanium alloy may be of any other composition.

The inner friction member 40 is bonded to the inner surface 36a facing the wheel 20 of the annular part 36 with a brazing filler metal layer 45, and the outer friction member 42 is bonded to the outer surface 36b of the same with a brazing filler metal layer 46. The surface of the outer friction member 42 is flush with the outer surface of the disk body 35.

The inner friction member 40 is formed of a stainless steel, such as SUS410M, JIS, in a shape substantially the same as that of the inner surface 36a of the annular part 36. Preferably, the thickness t3 of the inner friction member 40 is in the range of 0.3 to 0.5 mm, but the thickness is not limited thereto.

The outer frictionmember 42 is formed of a stainless steel, such as SUS410M, JIS, in a shape substantially the same as that of the outer surface 36b of the disk body 35. Preferably the thickness t4 of the outer friction member 42, similarly to that of the inner friction member 40, in the range of 0.3 to 0.5 mm, but the thickness is not limited thereto.

Preferably, the inner brazing filler metal sheet 45 and the outer brazing filler metal sheet 46 are formed of an activated silver solder containing 70% silver, 28%copper and 2% titanium. However the inner brazing filler metal sheet 45 and the outer brazing filler metal sheet 46 may be formed of any suitable material other than the activated silver solder.

Fig. 4 is a plan view of the brake disk 30 as viewed from the side of the wheel 19 (Fig. 2).

The annular inner friction member 40 is bonded to the inner surface 36a (Fig. 3) of the disk body 35 by brazing, and the annular outer friction member 42 is bonded to the outer surface 36b (Fig. 3) by brazing to form the brake disk 30.

Bolts 31 are passed through the through holes 37a of the brake disk 30 and are screwed in threaded holes formed in the hub 21 to fasten the brake disk 30 to the hub 21.

The relation between the friction coefficient associated with the brake disk 30 and the weight of the brake disk 30 will be described with reference to Table 1.

**Table 1**

| | Material | Friction coefficient (µ) | Weight |
|---|---|---|---|
| Comparative example 1 | Stainless steel | 0.5 | w |
| Comparative example 2 | Titanium alloy | 0.2-0.7 | 0.6W |
| Comparative example 3 | Aluminum alloy | 0.3 | 0.3W |
| Example | Titanium alloy and stainless steel | 0.5 | 0.7W |

A brake disk in Comparative example 1 is formed of a stainless steel, a brake disk in Comparative example 2 is formed of a titanium alloy, a brake disk in Comparative example 3 is formed of an aluminum alloy, and the brake disk in the first embodiment is a brake disk in Example.

The weight of each brake disk is represented by a multiple of the weight W of the brake disk in Comparative example 1.

Friction coefficient associated with Comparative example 1 is 0.5 and Comparative example 1 has a weight of W. The friction coefficient is sufficiently large but the weight is large.

Friction coefficient associated with Comparative example 2 varies in the range of 0.2 to 0.7 and Comparative example 2 has a weight of 0.6W. The weight is small enough, but the friction coefficient varies and it is difficult to produce stable braking force.

Friction coefficient associated with Comparative example 3 is 0.3 and Comparative example 3 has a weight of 0.3W. The weight, similarly to that of the Comparative example 2, is small enough, but the friction coefficient is small and it is difficult to produce sufficient braking force.

Friction coefficient associated with Example is 0.5 and Example has a weight of 0.7W. The friction coefficient is large enough and the weight is satisfactorily small.

The brake disk has the disk body 35 formed of the light titanium alloy having a high strength, and the friction members 40 and 42 respectively formed of the different iron-base materials are bonded to the opposite surfaces of the disk body 35 by brazing. Thus, the bonding of members of different materials by brazing enables the use of the light titanium alloy having a high strength for forming the disk body 35, which enables the brake disk 30 to be formed in a lightweight structure.

A brazing method employed in fabricating the brake disk 30 will be described.

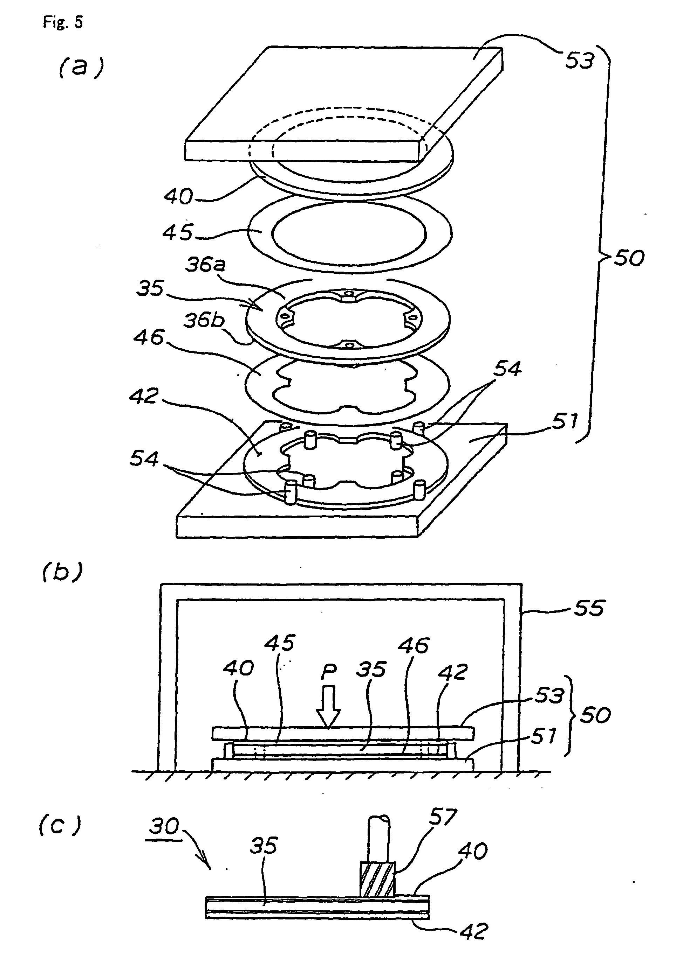

Figs. 5(a) to 5(c) illustrate a brazing method employed in fabricating the brake disk 30 in the first embodiment.

In a step shown in Fig. 5(a), a brazing jig 50 having a support plate 51 and a pressure plate 53 is prepared, the outer friction member 42 is located between a plurality of pins 54 attached to the support plate 51, and an outer brazing filler metal sheet 46, the disk body 35, an inner brazing filler metal sheet 45 and the inner friction member 40 are superposed in that order on the outer friction member 42. Then, the pressure plate 53 is placed on the inner friction member 40.

Preferably, the thickness of workpieces for forming the inner friction member 40 and the outer friction member 42 is slightly greater than a desired thickness of the inner friction member 40 and the outer friction member 42 in the range of 0.3 to 0.5 mm to provide the workpieces with a grinding allowance.

Preferably, the inner brazing filler metal sheet 45 has a shape similar to that of the inner friction member 40 and a thickness of 100 µm, but the shape and the thickness of the inner brazing filler metal sheet 45 are not limited thereto. Preferably, the outer brazing filler metal sheet 46 has a shape similar to that of the outer friction member 42 and a thickness of 100 µm, but the shape and the thickness of the inner brazing filler metal sheet 46 are not limited thereto.

The inner brazing filler metal sheet 45 and the outer brazing filler metal sheet 46 may be substituted by powder.

In a step shown in Fig. 5 (b), the jig 50 holding the outer friction member 42, the outer brazing filler metal sheet 46, the disk body 35, the inner brazing filler metal sheet 45 and the inner friction member 40 is placed in a vacuum vessel 55, a load P of about 2 kg is applied in the direction of the blank arrow to the pressure plate 53 to apply a pressure of 0.01 kgf/cm² to surfaces to be bonded together by brazing.

Subsequently, the vacuum vessel 55 is evacuated to a vacuum of 1.5 torr, and then the interior atmosphere of the vacuum vessel 55 is heated at 850 °C for 40 min to melt the inner brazing filler metal sheet 45 and the outer brazing filler metal sheet 46. Consequently, the inner friction member 40 is bonded to the inner surface 36a of the disk body 35 by the molten inner brazing filler metal sheet 45 and the outer friction member 42 is bonded to the outer surface 36b (Fig. 3) of the disk body 35 by the molten outer brazing filler metal sheet 46.

The brazing method loads the pressure plate 53 with the load P of about 2 kg to prevent the deformation of the inner friction member 40 and the outer friction member 42.

The outer friction member 42, the outer brazing filler metal sheet 46, the disk body 35, the inner brazing filler metal sheet 45 and the inner friction member 40 are located by the pins 54 to prevent the dislocation of those members during brazing.

The brazing method is able to bond together members of different materials, such as a member of a titanium alloy and a member of an iron-base material. Thus, the disk body 35 can be formed by a light titanium alloy having a high strength, which is effective in reducing the weight of the brake disk 30.

In a step shown in Fig. 5(c), the surfaces of the inner friction member 40 and the outer friction member 42 bonded to the disk body 35 are machined with a cutting tool 57 to finish the surfaces of the inner frictionmember 40 and the outer friction member 42 in a flatness required of the brake disk 30. Preferably, the thickness of the thus finished friction members 40 and 42 is in the range of 0.3 to 0.5 mm.

If the surfaces of the inner friction member 40 and the outer friction member 42 as bonded to the disk body 35 have a flatness required of the brake disk 30, the same surfaces do not need to be finished by machining.

The friction members 40 and 42 are bonded to the disk body 35 by the brazing method. The friction members 40 and 42 can be easily bonded to the disk body 35 simply by spreading a brazing filler metal between the friction members 40 and 42, and the disk body 35 and melting the brazing filler metal.

The brake disk may have a disk body formed of an aluminum alloy, and friction members formed of a stainless steel and bonded to the disk body by brazing. Thus, the brake disk in the second embodiment is the same as the brake disk 30 in the first embodiment except that the former has the disk body formed of the aluminum alloy.

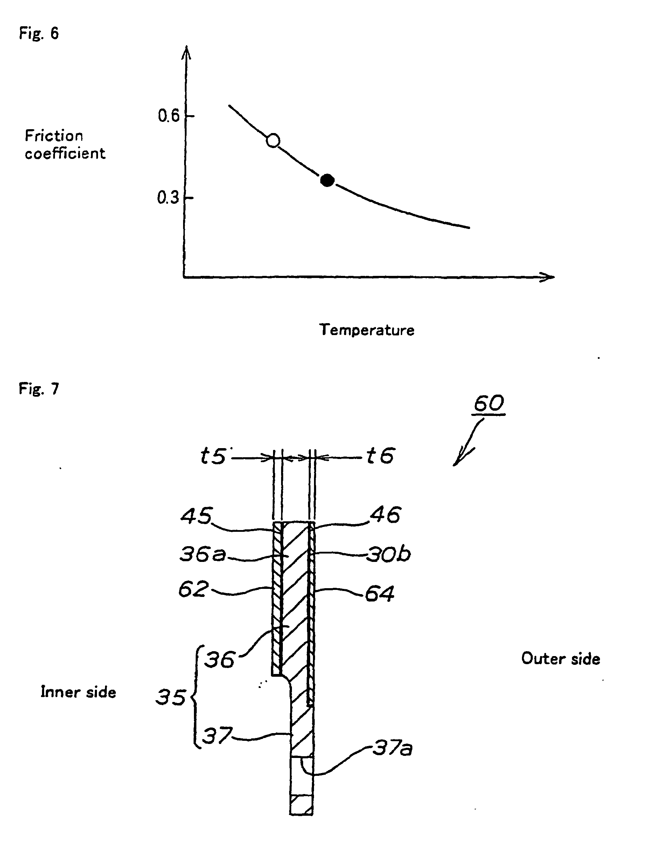

Fig. 6 is a graph showing the variation of the friction coefficient associated with the friction member of the brake disk in the second embodiment with the temperature of the same, in which friction coefficient associated with the friction member is measured on the vertical axis, the temperature of the friction member is measured on the horizontal axis, a solid circle is for a brake disk in Comparative example and a blank circle is for the brake disk in Example. The brake disk in Comparative example has a disk body integrally provided with friction parts and formed of a stainless steel. The brake disk in Example is the brake disk according to the invention.

The stainless steel has a heat transfer coefficient of about 0.18 cal/cm·s·°C and the aluminum alloy has a heat transfer coefficient of bout 0. 53 cal/cm·s·°C. Thus, the heat transfer coefficient of the aluminum alloy is as great as about three times that of the stainless steel.

The temperature of the friction member and the friction coefficient associated with the friction member were measured by rotating the brake disk at a predetermined rotating speed, and pressing brake pads against the rotating brake disk for braking.

Heat generated in the friction member of the brake disk in Comparative example by a braking action cannot be transferred at a high rate to the disk body. Therefore, if the braking action continues for a long time, the temperature of the friction member rises and the friction coefficient decreases slightly as indicated by a solid circle. Although this brake disk in Comparative example is satisfactory in braking effect, a further effective braking disk has been desired.

Since the disk body of the brake disk is formed of the aluminum alloy, heat generated in the friction member during braking can be satisfactorily absorbed by the disk body. Therefore, even if large braking energy is produced, the rise of the temperature of the friction member can be suppressed as indicated by a blank circle. Consequently, the friction coefficient remains substantially constant and a sufficient braking force can be produced.

Moreover, the brake disk can be formed in a lightweight structure, which is effective in improving the performance of the motorcycle.

A brake disk according to the present invention will be described with reference to Fig. 7 showing the brake disk in a sectional view of, in which parts like or corresponding to those of the brake disk in the first embodiment are denoted by the same reference characters and the description thereof will be omitted.

A brake disk 60 has a disk body 35 formed of a titanium alloy, an inner friction member 62 and an outer friction member 64. The inner friction member 62 and the outer friction member 64 are bonded to the inner surface 36a of the disk body 35 on the side of a wheel and an outer surface 36b of the disk body 35 opposite the inner surface 36a, respectively, by brazing.

The inner friction member 62 is bonded to the inner surface 36a of an annular part 36 by an inner brazing filler meal layer 45 and the outer friction member 64 is bonded to the outer surface 36b of the annular part 36 by an outer brazing filler meal layer 46. The surface of the outer friction member 64 is flush with the surface of the outer surface of the disk body 35.

The inner friction member 62 is formed of a stainless steel, such as SUS410M, JIS, in a shape substantially the same as that of the inner surface 36a of the annular part 36. Preferably, the thickness t5 of the inner friction member 62 is in the range of 0.3 to 0.5 mm, but the thickness is not limited thereto.

The outer friction member 64 is formed of a stainless steel, such as SUS410M, JIS, in a shape substantially the same as that of the outer surface 36b of the disk body 35. Preferably, the thickness t6 of the outer friction member 64 is, similarly to that of the inner friction member 62, in the range of 0.3 to 0.5 mm, but the same thickness is not limited thereto.

The thickness t5 of the inner friction member 62 of the brake disk 60 is greater than the thickness t6 of the outer friction member 64 of the brake disk 60, i.e., the inner friction member 62 and the outer friction member 64 have different thicknesses, respectively. The brake disk 60 is attached to the hub 21 of the wheel 19 of the motorcycle 10 shown in Fig. 1 with the thicker friction member 62 facing the wheel 19 and the thinner friction member 64 faced outward so as to be exposed to running wind more efficiently than the former.

The inner friction member 62 and the outer friction member 64 are the same in construction as the inner friction member 40 and the outer friction member 42 of the first embodiment, respectively, except that the inner friction member 62 and the outer friction member 64 have the different thicknesses t5 and t6, respectively.

As generally known, when the brake disk 60 is incorporated into the motorcycle 10 shown in Fig. 1, the outer surface of the brake disk 60, i.e., the outer friction member 64, is exposed more efficiently to running wind than the inner surface of the same, i.e., the inner friction member 62.

Therefore, when a braking force is exerted on the brake disk 60, the inner friction member 62 is heated at a temperature higher than that at which the outer friction member 64 is heated. Friction coefficients associated with the inner friction member 62 and the outer friction member 64 decrease as the temperatures of the inner friction member 62 and the outer friction member 64 rise. Therefore, it is important to maintain the friction members at a fixed temperature.

To realize this, the inner friction member 62 is formed in the thickness t5 greater than the thickness t6 of the outer friction member 64. The thicker inner friction member 62 is capable of absorbing a large amount of heat generated when a braking force is applied to the brake disk 60. Thus, the inner friction member 62 and the outer friction member 64 can be maintained at substantially the same temperature even though the inner friction member 62 is exposed to running wind less efficiently than the outer friction member 64. Consequently, both the friction coefficient associated with the inner friction member 62 and the friction coefficient associated with the outer friction member 64 can be held on a substantially fixed level and substantially the same braking force can be produced on the opposite sides of the brake disk 60.

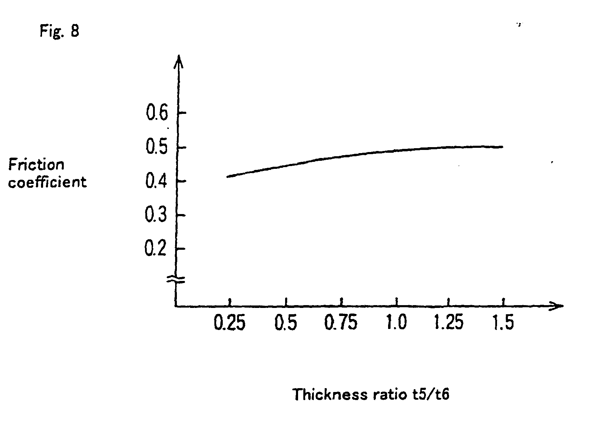

Influence of the thickness of the friction member on friction coefficient will be explained with reference to Figs. 7 and 8.

Fig. 8 is a graph showing the relation between friction coefficient associated with the brake disk and the thickness of the friction members, in which the mean of the friction coefficients respectively associated with the friction members 62 and 64 is measured on the vertical axis and the thickness ratio t5/t6, i.e., the ratio of the thickness t5 of the inner friction member 62 to the thickness t6 of the outer friction member 64, is measured on the horizontal axis. Friction coefficients were measured under measuring conditions that are more severe than those for the measurement of the friction coefficients shown in Table 1 associated with the brake disks and those in the comparative examples to elucidate the effect of the difference in thickness between the inner and the outer friction member on the difference in friction coefficient. Therefore, the values of the friction coefficients are different from those shown in Table 1.

Friction coefficients respectively associated with the opposite surfaces of the brake disk are 0.41 when the thickness ratio t5/t6 is 0.25, i.e., when the thickness t5 of the inner friction member 62 is 1/4 of the thickness t6 of the outer friction member 64. Friction coefficients respectively associated with the opposite surfaces of the brake disk are 0.43 when the thickness ratio t5/t6 is 0.5, i.e., when the thickness t5 of the inner friction member 62 is 1/2 of the thickness t6 of the outer friction member 64. Friction coefficients respectively associated with the opposite surfaces of the brake disk are 0.46 when the thickness ratio t5/t6 is 0.75, i.e., when the thickness t5 of the inner friction member 62 is 3/4 of the thickness t6 of the outer friction member 64.

Friction coefficients respectively associated with the opposite surfaces of the brake disk are 0.48 when the thickness ratio t5/t6 is 1.0, i.e., when the thickness t5 of the inner friction member 62 is equal to the thickness t6 of the outer friction member 64. Friction coefficients respectively associated with the opposite surfaces of the brake disk are 0.49 when the thickness ratio t5/t6 is 1.25, i.e., when the thickness t5 of the inner friction member 62 is 1.25 times the thickness t6 of the outer friction member 64. Friction coefficients respectively associated with the opposite surfaces of the brake disk are 0.5 when the thickness ratio t5/t6 is 1.5, i.e., when the thickness t5 of the inner friction member 62 is 1.5 times the thickness t6 of the outer friction member 64.

As obvious from the graph shown in Fig. 8, friction coefficients respectively associated with the opposite surfaces of the brake disk are 0.46, which are fairly satisfactory, when the thickness t5 of the inner friction member 62 is equal to the thickness t6 of the outer friction member 64.

Friction coefficients respectively associated with the opposite surfaces of the brake disk can be increased beyond 0.46 when the thickness t5 of the inner friction member 62 is greater than the thickness t6 of the outer friction member 64. Particularly, when the thickness t5 of the inner friction member 62 is 1.t times the thickness 5t of the outer friction member 64, friction coefficients associated with the opposite surfaces of the brake disk is as large as 0.5.

The respective disk bodies of the brake disks are formed of the titanium alloy; those disk bodies maybe formed of a lightmaterial having a high rigidity other than the titanium alloy, such as titanium, aluminum, an aluminum alloy or the like.

The disk body of the brake disk may be formed of an aluminum alloy; this disk body may be formed of a material having a large heat transfer coefficient, such as aluminum.

Although the friction members of the foregoing embodiments are formed of the stainless steel, the same may be formed of an iron-base material other than the stainless steel, such as a carbon steel or cast iron, provided that the iron-base material is capable of forming friction members having a frictional property represented by a satisfactory friction coefficient.

The inner frictionmember 62 facing the wheel is thick and the outer friction member 64 not facing the wheel is thin.

## Claims

1. A brake disk for a motorcycle (10), to be mounted on a hub (21) included in a wheel (19), said brake disk (60) comprising: a disk body (35) formed of a titanium alloy or an aluminum alloy; and friction members (62, 64) formed of an iron-base material and bonded to the opposite surfaces (36a, 36b) of the disk body (35) by brazing, **characterized in that** the thickness (t5) of the friction member (62) bonded to one surface (36a) of the brake disk (60) in axial direction is greater than the thickness (t6) of the friction member (64) bonded to the opposite surface (36b) of the brake disk (60).

2. A motorcycle comprising a brake disk according to claim 1, **characterized in that** the fiction member (62) having the greater thickness (t6) faces the wheel (19) of the motorcycle.

## Patentansprüche

1. Bremsscheibe für ein Kraftrad (10), welche an einer in einem Rad (19) enthaltenen Nabe (21) anzubringen ist, wobei die Bremsscheibe (60) umfasst: einen Scheibenkörper (35), welcher aus einerTitanlegierung oder einer Aluminiumlegierung gebildet ist; und Reibungselemente (62, 64), welche aus einem Material auf Eisenbasis gebildet sind und mit den gegenüberliegenden Flächen (36a, 36b) des Scheibenkörpers (35) durch Löten verbunden sind, **dadurch gekennzeichnet, dass** die Dicke (t5)des mit einer Fläche (36a) der Bremsscheibe (60) verbundenen Reibungselements (62) in der axialen Richtung größer als die Dicke (t6) des mit der gegenüberliegenden Fläche (36b) der Bremsscheibe (60) verbundenen Reibungselements (64) ist.

2. Kraftrad, umfassend eine Bremsscheibe gemäß Anspruch 1, **dadurch gekennzeichnet, dass** das Reibungselement (62), welches die größere Dicke (t6) hat, dem Rad (19) des Kraftrads zugewandt ist.

## Revendications

1. Disque de frein pour une motocyclette (10), destiné à être monté sur un moyeu (21) inclus dans une roue (19), ledit disque de frein (60) comprenant : un corps (35) de disque formé d'un alliage de titane ou d'un alliage d'aluminium ; et des éléments de frottement (62, 64) formés d'un matériau à base de fer et collés aux surfaces opposées (36a,36b) du corps (35) de disque par brasage, **caractérisé en ce que** l'épaisseur (t5) de l'élément de frottement (62) collé à une surface (36a) du disque de frein (60) dans la direction axiale est supérieure à l'épaisseur (t6) de l'élément de frottement (64) collé à la surface opposée (36b) du disque de frein (60).

2. Motocyclette comprenant un disque de frein selon la revendication 1, **caractérisée en ce que** l'élément de frottement (62) ayant l'épaisseur la plus importante (t6) fait face à la roue (19) de la motocyclette.
